# EUROPEAN PATENT APPLICATION

(11) **EP 4 137 691 A1**
(43) Date of publication of application: **22.02.2023**
(21) Application number: 22189311.8
(22) Date of filing: 08.08.2022
(51) Int. Cl.: F02C 7/232, F02C 9/26

(54) **SERIAL METERING ORIFICES FOR A METERING VALVE**

(30) Priority: 20.08.2021 US 202117408183
(71) Applicant: Hamilton Sundstrand Corporation, Charlotte, NC 28217-4578 (US)
(72) Inventor: RICKIS, Aaron F., Longmeadow, MA (US); BUREK, Lukasz, Portland, CT (US); JOHNSON Jr., Wayne S., West Hartford, CT (US); DOERNER, Steve, Enfield, CT (US)
(74) Representative: Dehns

(57) **Abstract**

A metering valve (26) has a main inlet port (32) and a spool (30) movable, and a housing (28) outlet port in a housing (28). The spool (30) has a metering inlet orifice (56) selectively aligned with the main inlet port (32), and a metering outlet orifice (57) selectively aligned with the main outlet port. The main inlet port (32) communicates with the metering inlet orifice (56), and the outlet port communicates with the metering outlet orifice (57) to each provide a metering orifice. The main outlet port communicates downstream to a minimum pressure valve. The minimum pressure valve has a piston biased to a closed position by a spring force, and a line downstream of the main outlet port acting against a face of the piston in opposition to the spring force to ensure a minimum pressure moving downstream past the piston to a use. A fuel system is also disclosed.

## Description

### BACKGROUND OF THE INVENTION

This application relates to a metering valve that splits a pressure drop across serial metering orifices.

Metering valves are used in any number of applications. In one application a metering valve is incorporated into a fuel supply system. A fuel supply system may have a number of metering valves, including a metering valve for supplying fuel downstream of a heat exchanger to a fuel tank for a gas turbine engine.

Other metering valves perform other functions. As an example, a metering valve controls the recirculation of fuel at lower power operation of the gas turbine engine to ensure an adequate supply of fuel as a heat sink for a heat exchanger.

There are a number of challenges with providing adequate fluid flow across a metering valve under different conditions.

### SUMMARY OF THE INVENTION

A fluid flow system includes a metering valve having a housing including a main inlet port and a spool movable within the housing, and a housing outlet port in the housing. The spool has a metering inlet orifice selectively aligned with the main inlet port, and a metering outlet orifice selectively aligned with the main outlet port. The spool has an internal cavity connecting the metering inlet orifice to the metering outlet port. The main inlet port communicates with the metering inlet orifice, and the outlet port communicates with the metering outlet orifice to each provide a metering orifice and achieve a combined pressure drop across the metering valve. The main outlet port communicates downstream to a minimum pressure valve. The minimum pressure valve has a piston biased to a closed position by a spring force, and a line downstream of the main outlet port acting against a face of the piston in opposition to the spring force to ensure a minimum pressure moving downstream past the piston to a use.

A fuel system is also disclosed.

These and other features of the present invention can be best understood from the following specification and drawings, the following of which is a brief description.

### BRIEF DESCRIPTION OF THE DRAWINGS

Figure 1A is a fluid flow system in a first position.
Figure 1B is a cross-sectional view through a metering valve at the Figure 1A position.
Figure 2A shows the fluid flow system in a second position.
Figure 2B shows a cross-section of a metering valve at the second flow position.
Figure 2C shows the fluid flow system in a third position.
Figure 2D shows a cross-section of a metering valve at the third flow position.
Figure 3A shows the fluid flow system at a fourth position.
Figure 3B shows a cross-section of a metering valve at a metering flow position.
Figure 3C is an enlarged view of a portion of Figure 3B at another metering position.
Figure 3D shows a prior art metering valve.
Figure 4 graphically shows the fluid flow at the three positions.

### DETAILED DESCRIPTION

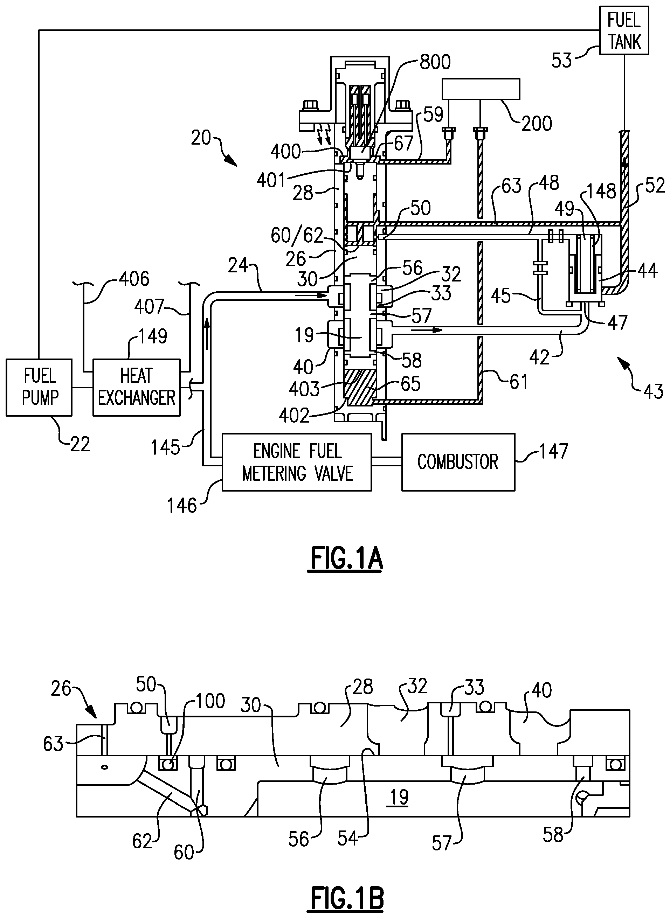

A fluid flow system 20 is illustrated in Figure 1A at a shutoff position. A fuel pump 22 communicates with a tank 53. Fuel pump 22 supplies fuel to a heat exchanger 149. A connection 407 supplies hot oil to the heat exchanger 149 to be cooled by the fuel and then back through connection 407 to a use. A first branch 145 downstream of the heat exchanger 149 passes through engine fuel metering valve 146 to a combustor 147 in an associated gas turbine engine. A second branch enters into a connection 24 heading to a metering valve 26. Metering valve 26 has a housing 28 including fluid ports and a moving spool 30. The housing 28 has a main inlet port 32 and a failsafe port 33. Fluid communicates from these ports into an interior 19 of the spool 30, and to an outlet orifice 58 in the spool 30. Fluid passes through the spool valve into an outlet port 40 in housing 28 and into a line 42 and to a minimum pressure/shutoff valve 43. A tap 45 communicates fluid from line 42 into a line 48 communicating back with a port 50 in the housing 28. A spring 148 biases a piston 44 to close off the supply of line 42 to a connection 52 leading to a use for the fluid. The use may be fuel tank 53. A forward face 47 of the piston 44 sees the pressure from the line 42 and a rear chamber 49 sees the pressure from the line 48 and a bias force from spring 148. In the Figure 1A position, the fluid pressure at the face 47 is essentially the same as that at 48, and thus the spring 148 holds the piston 44 in this closed position.

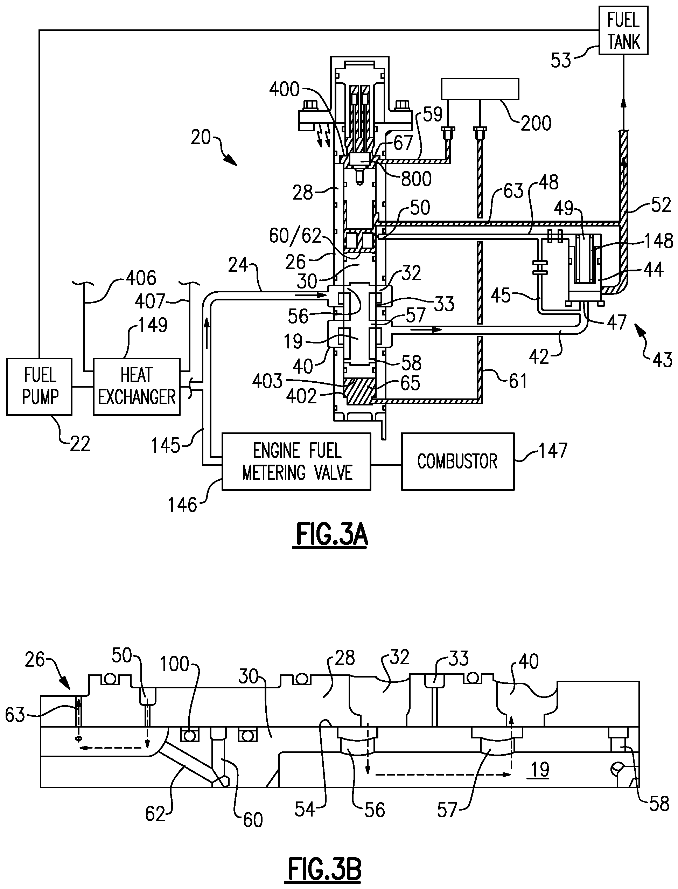

As the speed of the engine increases a greater amount of fuel is supplied to the combustor 147 through the line 145. Thus, the shutoff position of Figure 1A may be utilized. No fuel will pass through the connection 24 under such conditions. As the speed of the engine slows less fuel is required to be delivered to the combustor 147. However, the heat load on the engine, and thus the heat exchanger 149 remain high, and thus it would be desirable to have increased fuel flow into the connection 24. For this reason, the metering valve 26 has a metering position (see Figures 3A and 3B) and the shutoff position (see Figures 1A and 1B).

Valve 26 is shown at the Figure 1A position in Figure 1B. The housing 28 has the port 50, the main inlet port 32 and outlet port 40 all shown in a position where they are closed by an outer peripheral surface 54 of the valve spool 30. In addition, a seal 100 closes port 50. No fluid communicates with orifices 56, 57, 58 or 60. As is clear, main inlet port 32 is larger than failsafe port 33.

The Figure 1A position may be utilized in this application when the main fuel supply to the combustor is large such as at high power operation. Under such conditions recirculation of fuel to the fuel tank 53 may not be needed.

Control fluid from line 61 is passed to a chamber 65 on one side of the spool 30 and fluid from another source 59 passes into a chamber 67 on an opposed side of the spool to move the spool to a desired position. A control 200, shown schematically, selectively controls the supply of fluid to these chambers.

The control 200 communicates with a control for the overall engine, which may be a full authority digital electric control ("FADEC"). The FADEC would instruct the controller 200 to position the metering valve 26 such that when there is a high-volume flow of fuel to the combustor 147, the metering valve 26 may be in the closed position of Figure 1A. However, at low volume flow to the combustor 147 the control 200 may move the metering valve to meter fuel across the metering valve 26 and back to the fuel tank 53. This ensures an adequate volume of fuel flowing through the heat exchanger 149. The control 200 can accurately position the metering valve 26 at the metering positions of Figure 3A and 3B at an infinite number of positions, including a full flow position.

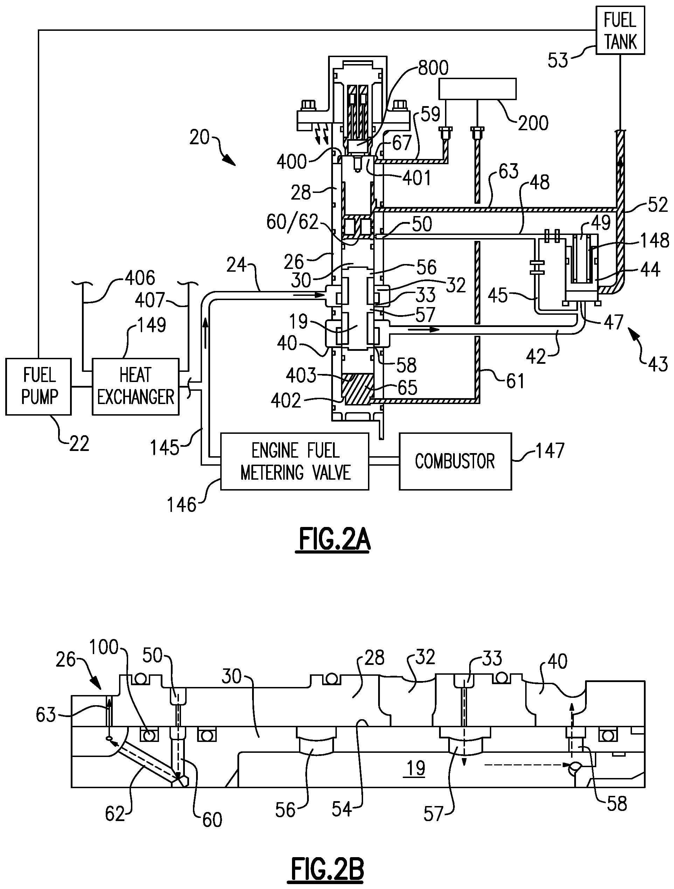

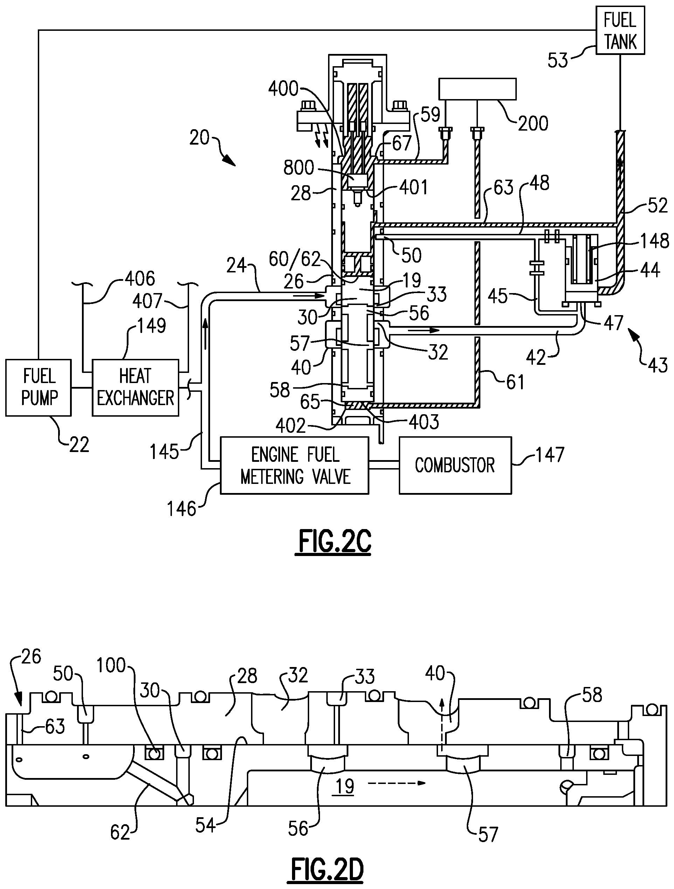

In shutoff position of Figure 1A, one can see that the spool 30 is at a mid-stroke position. That is, a first end 401 of the spool 30 is spaced from a first shoulder 400 of the housing 28, providing the chamber 67. Further, a second end 403 of the spool 30 is spaced from a second shoulder 402 of the housing 28, providing the chamber 65. In the prior art, the shutoff position is typically at one of the end of stroke positions wherein one of the first or second ends 401 or 403 would be bottomed out on the shoulder 400 or 402. Notably, the end 401 of the spool 30 is defined to not include a transducer 800 which extends from the first end 401. Because the shutoff position is mid-stroke, minimum-stroke and maximum-stroke failsafe positions can be defined as shown in Figures 2A/2B/2C/2D, and as described below.

Figure 2A shows a minimum-stroke failsafe flow position. This position might occur if the control 200 fails such that the pressure in cavity 65 is always greater than the pressure in cavity 67. The spool is biased to a position at which first end 401 bottoms out on first shoulder 400 due to the presence of pressurized fluid in the chamber 65. This may occur should the control 200 fail, and there is a desire to supply a failsafe fluid flow such that sufficient fluid continues to flow from the heat exchanger. Now, the main inlet port 32 is still closed, but a failsafe port 33 is aligned with the failsafe orifice/metering outlet orifice 57 (it is also aligned in Figure 1B, but the fluid cannot get to the outlet port 40). In this position, fluid from the source 22 can pass into the failsafe orifice/metering outlet orifice 57 and outwardly of the outlet port 40 through the failsafe outlet orifice 58. This flow then reaches the minimum pressure/shutoff valve 43.

If the connections 45 and 48 were left as in Figure 1A, the minimum pressure/shutoff valve 43 would still be biased closed. However, in the Figure 2A/2B position one can see that the port 50, which "sees" the pressure from line 42, is now communicating through passage 62 and back into line 63. Thus, the pressure in the chamber 49 is effectively a lower pressure than that on the face 47. This allows the minimum pressure/shutoff valve 43 to move piston 44 to an open position.

Figures 2C and 2D show a maximum-stroke failsafe flow position at which the orifice 56 communicates with the failsafe port 33, and the orifice 57 communicates with the outlet port 40. As can be seen, connection 50 still communicates to line 63, such that the minimum flow/shutoff valve 43 allows flow. This position might occur if the control 200 fails such that the pressure in cavity 67 is always greater than the pressure in cavity 65. End 403 of the spool 30 bottoms out on the second shoulder 402 of the housing 28.

Aspects of this disclosure may be better understood from co-pending United States Patent Application No. 17/408212, entitled "Metering Valve With Mid-stroke Shutoff," filed on even date herewith and owned by the Applicant for the instant application.

Figure 3A shows a full open fluid metering position. In this position fluid passes through the main inlet port 32, through the metering inlet orifice 56, and then through the failsafe orifice/metering outlet orifice 57 to the outlet port 40. Spool 30 has an internal cavity 19 connecting metering inlet orifice 56 to the metering outlet orifice 57. This is a fuel metering position which will be utilized to provide a desired amount of fuel during operation of the engine.

Figure 3B shows an intermediate metering position.

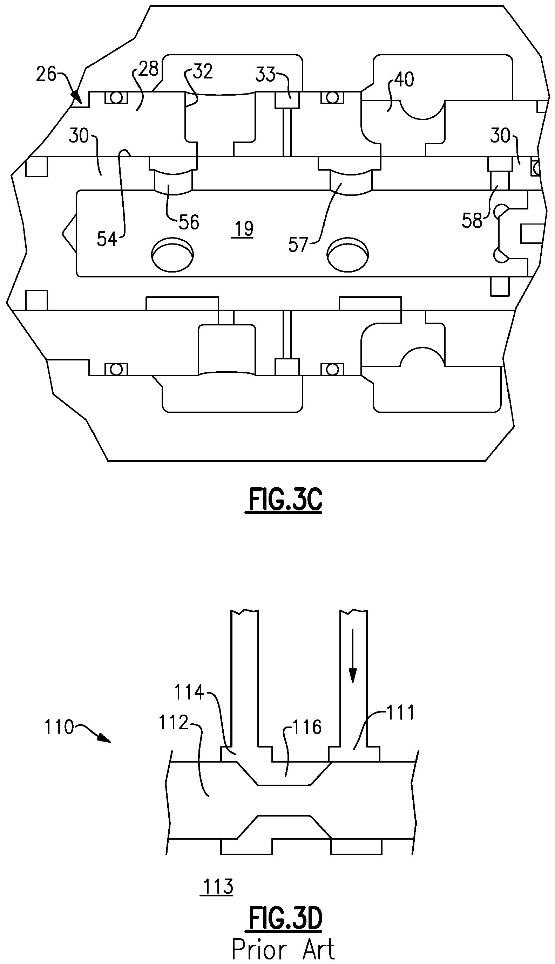

Figure 3C shows that the timing between the two metering orifices opening occurs simultaneously. Thus, this is the beginning of metering flow.

In one embodiment, Applicant has recognized that it would be desirable to split a pressure drop across the metering valve between serial metering ports. Thus, this is the beginning of metering flow.

The disclosed system can operate at very high pressures, and pressures over say 2000 psi. At such high pressures, a large pressure drop across a single metering orifice could result in cavitation. Thus, in a feature of this disclosure, the two metering orifices 32/56 and 57/40 each provide pressure drop and metering. Thus, the pressure drop may be split between the two. Notably, when the metering inlet orifice 56 initially becomes open to the main inlet port 32, the failsafe orifice/metering outlet orifice 57 is also initially becoming open to the outlet port 40.

The pressure drops across the metering orifices 32/56 and 57/40 act in combination with the minimum pressure/shutoff valve 43 to reduce cavitation. As the valve 43 begins to open, a certain amount of pressure is required to overcome the spring force of spring 148, and open the piston 44. This increases the pressure on the face 47 of the piston 44, and thus the pressure to the outlet of the metering valve 26. In embodiments, a pressure drop ratio can be defined across each of the pairs of orifices 32/56 and 57/40. A pressure drop ratio is defined as: PDR = (P_{before_window} - P_{after_window})/P_{after_window}.

In embodiments, the pressure drop ratio across the two pairs of orifices may be equal, although the ratios may also be different.

As shown in Figure 3D, prior art metering valve 110 had a spool 112 movable within a housing 113, to meter fuel between an inlet 111 and an outlet 114. As is clear, there is a single port 116 connecting the inlet 111 to the outlet 114. In contrast the disclosed spool has internal cavity 19 between orifices 56 and 57 to provide two separate pressure drops. As mentioned above, the disclosure utilizing plural serial metering orifices splits a pressure drop across the two metering orifices, and thus addresses the cavitation concerns as mentioned above.

In embodiments, the two metering orifices can provide different amounts of pressure drop, but they will both provide pressure drop in embodiments of this disclosure.

A fluid flow system under this disclosure could be said to include a metering valve having a housing including a main inlet port and a spool movable within the housing, and a main outlet port in the housing. The spool has a metering inlet orifice selectively aligned with the main inlet port, and a metering outlet orifice selectively aligned with the main outlet port. The spool has an internal cavity connecting the metering inlet orifice to the metering outlet orifice. The main inlet port communicates with a metering inlet orifice, and the main outlet port communicates with the metering outlet orifice to each provide a metering orifice and achieve a combined pressure drop across the metering orifice. The main outlet port communicates downstream to a minimum pressure valve. The minimum pressure valve has a piston biased to a closed position by a spring force, and a line downstream of the main outlet port acting against a face of the piston in opposition to the spring force to ensure a minimum pressure moving downstream past the piston to a use.

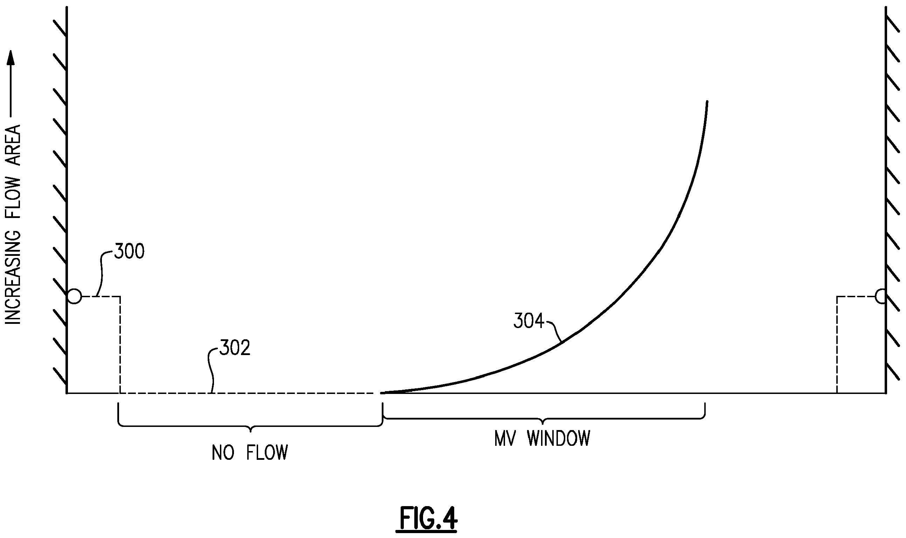

Figure 4 is a plot of example relative fluid flows at the three conditions. Level 300 is the volume of fluid flow in the Figure 2A/2B/2C/2D position. Level 302 is what occurs during the shutoff position of Figures 1A and 1B. The increasing amount level 304 is what occurs during metering operation of Figures 3A-3C.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. A fluid flow system comprising:
a metering valve (26) having a housing (28) including a main inlet port (32) and a spool (30) movable within the housing (28), and a main outlet port in the housing (28), the spool (30) having a metering inlet orifice (56) selectively aligned with the main inlet port (32), and a metering outlet orifice (57) selectively aligned with the main outlet port, the spool (30) having an internal cavity connecting the metering inlet orifice (56) to the metering outlet port;
wherein the main inlet port (32) communicates with the metering inlet orifice (56), and the main outlet port communicates with the metering outlet orifice (57) to each provide a metering orifice and achieve a combined pressure drop across the metering orifices; and
the main outlet port communicating downstream to a minimum pressure valve, the minimum pressure valve having a piston biased to a closed position by a spring force, and a line downstream of the main outlet port acting against a face of the piston in opposition to the spring force to ensure a minimum pressure moving downstream past the piston to a use.

2. The fluid flow system as set forth in claim 1, wherein the metering inlet orifice (56) begins to open to communicate with the main inlet port (32) in the housing (28) simultaneously with the metering outlet orifice (57) beginning to open to the main outlet port.

3. The fluid flow system as set forth in claim 2, wherein a pressure drop ratio across the metering inlet orifice (56) and the main inlet port (32) in the housing (28), and a pressure drop ratio against the metering outlet orifice (57) and the main outlet port in the housing (28) are approximately equal.

4. The fluid flow system as set forth in claim 3, wherein a control selectively applies pressurized fluid to opposed ends of the spool (30) to move the spool (30) to achieve a desired position, and optionally wherein the system is utilized to meter fuel from a heat exchanger (149).

5. The fluid flow system as set forth in any preceding claim, wherein a pressure drop ratio across the metering inlet orifice (56) and the main inlet port (32) in the housing (28), and a pressure drop ratio against the metering outlet orifice (57) and the main outlet port in the housing (28) are approximately equal.

6. The fluid flow system as set forth in claim 5, wherein a control selectively applies pressurized fluid to opposed ends of the spool (30) to move the spool (30) to achieve a desired position, and optionally wherein the system is utilized to meter fuel from a heat exchanger (149).

7. The fluid flow system as set forth in any preceding claim, wherein a control selectively applies pressurized fluid to opposed ends of the spool (30) to move the spool (30) to achieve a desired position.

8. The fluid flow system as set forth in any preceding, wherein the system is utilized to meter fuel from a heat exchanger (149).

9. A fuel system for a gas turbine engine comprising:
a heat exchanger (149);
a connection to supply relatively hot oil to the heat exchanger (149);
a fluid line downstream of said heat exchanger (149) to communicate the fuel to a first branch leading to an engine metering valve to meter fuel heading to a combustor for a gas turbine engine, and a second branch leading into an inlet port on a bypass metering valve having a housing (28) including a main inlet port (32) and a spool (30) movable within the housing (28), and a main outlet port in the housing (28), the spool (30) having a metering inlet orifice (56) selectively aligned with the main inlet port (32), and a metering outlet orifice (57) selectively aligned with the main outlet port, the spool (30) having an internal cavity connecting the metering inlet orifice (56) to the metering outlet orifice (57);
wherein the main inlet port (32) communicates with the metering inlet orifice (56), and the main outlet port communicates with the metering outlet orifice (57) to each provide a metering orifice and achieve a combined pressure drop across the metering orifices; and
the main outlet port communicating downstream to a minimum pressure valve, the minimum pressure valve having a piston biased to a closed position by a spring force, and a line downstream of the main outlet port acting against a face of the piston in opposition to the spring force to ensure a minimum pressure moving downstream past the piston to a use.

10. The fuel system as set forth in claim 9, wherein the metering inlet orifice (56) begins to open to communicate with the main inlet port (32) in the housing (28) simultaneously with the metering outlet orifice (57) beginning to open to the main outlet port.

11. The fuel system as set forth in claim 10, wherein a pressure drop ratio across the metering inlet orifice (56) and the main inlet port (32) in the housing (28), and a pressure drop ratio against the metering outlet orifice (57) and the main outlet port in the housing (28) are approximately equal.

12. The fuel system as set forth in claim 11, wherein a control selectively applies pressurized fluid to opposed ends of the spool (30) to move the spool (30) to achieve a desired position, and optionally wherein the system is utilized to meter fuel from the heat exchanger (149).

13. The fuel system as set forth in any of claims 9 to 12, wherein a pressure drop ratio across the metering inlet orifice (56) and the main inlet port (32) in the housing (28), and a pressure drop ratio against the metering outlet orifice (57) and the main outlet port in the housing (28) are approximately equal.

14. The fuel system as set forth in claim 13, wherein a control selectively applies pressurized fluid to opposed ends of the spool (30) to move the spool (30) to achieve a desired position, and optionally wherein the system is utilized to meter fuel from the heat exchanger (149).

15. The fuel system as set forth in any of claims 9 to 14, wherein a control selectively applies pressurized fluid to opposed ends of the spool (30) to move the spool (30) to achieve a desired position, and/or wherein the system is utilized to meter fuel from the heat exchanger (149).
